# EUROPÄISCHE PATENTSCHRIFT

(11) **EP 1 527 961 B1**
(45) Veröffentlichungstag und Bekanntmachung des Hinweises auf die Patenterteilung: **02.11.2006**
(21) Anmeldenummer: 04023037.7
(22) Anmeldetag: 28.09.2004
(51) Int. Cl.: B60R 21/20

(54) **Gassackrückhaltesystem**
Restraining system with airbag
Système de retenue avec coussin gonflable

(30) Priorität: 27.10.2003 DE 20316519 U
(43) Veröffentlichungstag der Anmeldung: 04.05.2005
(73) Patentinhaber: TRW Automotive Safety Systems GmbH, 63743 Aschaffenburg (DE)
(72) Erfinder: Burgard, Jürgen, 63768 Hösbach (DE); Fleckenstein, Jupp, 63856 Bessenbach (DE); Fuchs, Michael, 63825 Westerngrund (DE); Stransfeld, Bernd, 63762 Grossostheim (DE)
(74) Vertreter: Kitzhofer, Thomas

(56) Entgegenhaltungen:
- EP-A- 1 167 132
- EP-A- 1 354 772
- WO-A-00/74980
- US-A- 5 380 037
- US-A1- 2004 169 358

## Beschreibung

Die Erfindung betrifft ein Gassackrückhaltesystem nach dem Oberbegriff des Anspruchs 1.

Ein solches Rückhaltesystem, das in der WO 00/74980 A offenbart wird, ist üblicherweise im Fahrzeuglenkrad integriert. Hierbei wird ein Gassackmodul durch eine Rastverbindung mit dem Lenkradskelett verbunden, die auch wieder lösbar sein muß. Es sind mehrere Rastverbindungen vorgeschlagen worden, unter anderem haarnadelförmige Federn, bei denen zum Beispiel ein Schenkel befestigt und der andere Schenkel elastisch auslenkbar ist, um in eine Nut eines Rasthakens verriegelnd einzugreifen. Darüber hinaus ist beispielsweise eine große, kreisringförmige Einzelfeder angedacht, die mehrere Rasthaken verriegelnd hintergreift.

Aufgabe der Erfindung ist es, ein Gassackrückhaltesystem zu schaffen, bei dem die Feder platzsparend untergebracht ist, einfach verrastet, eine große Vorspannung erlaubt und vor allem einen großen Federweg besitzt. Diese Aufgabe wird durch ein Gassackrückhaltesystem nach Anspruch 1 gelöst.

Das erfindungsgemäße Gassackrückhaltesystem hat eine Feder mit einem Lagerungsabschnitt und einem hakenseitigen Verriegelungsabschnitt. Die große Auslenkung des Verriegelungsabschnitts wird durch einen gewickelten Abschnitt zwischen Lagerungsabschnitt und Verriegelungsabschnitt erreicht. Dieser gewikkelte Abschnitt ermöglicht einen extremen Federweg und eine hohe Vorspannung. Diese beiden Faktoren erlauben es wiederum, die Feder und den Haken mit einem geringen baulichen Aufwand vor allem platzsparend auszuführen. Im Stand der Technik waren kleine Feder- und damit Verriegelungswege erforderlich. Die Erfindung schafft zudem auch eine extrem sichere Verriegelung durch einen längeren Feder- und Verriegelungsweg.

Vorzugsweise ist der Verriegelungsabschnitt zu einem Bügel umgeformt, was ihm eine höhere Stabilität verleiht und es ermöglicht, daß der Bügel im montierten Zustand des Systems den Haken umgreift, ähnlich einer Schlinge. Dies schafft zusätzliche Sicherheit für die Befestigung des erfindungsgemäßen Systems.

Gemäß der bevorzugten Ausführungsform ist die Feder ähnlich der Feder in einer Mausefalle ausgeführt, also mit einem Lagerungsabschnitt, der zwei freie Enden der Federn hat. Diese gehen jeweils in einen separaten, gewickelten Abschnitt über. Die Feder erstreckt sich von den beiden gewickelten Abschnitten dann zum Verriegelungsabschnitt, der wie gesagt bügelförmig ausgeführt sein kann. Diese Art von Feder heißt auch Doppelkörperfeder mit Haamadelverbindung. Sie bietet eine große Auslenkung zwischen Verriegelungsabschnitt und Lagerungsabschnitt. Diese Abschnitte schwenken um eine gedachte Achse, die durch den gewickelten Abschnitt verläuft.

Eine einfache Befestigung der Feder ergibt sich durch umgeformte Blechabschnitte am Modul bzw. am Fahrzeugteil, welche die Lagerungsabschnitte klemmen.

Das heutzutage übliche Gassackmodul im Fahrzeuglenkrad ist ein sogenanntes Floating-Hom-Modul. Das bedeutet, das Modul ist in Lenkradachsrichtung verschiebbar, um einen Hupenschaltkreis zu schließen.

In diesem Zusammenhang wird das Gassackmodul oft mit einer Zwischenplatte ausgeführt, die zwischen dem Fahrzeug (hier dem Lenkrad) und einem Modulgehäuse sitzt. Die Feder kann zur Befestigung der Zwischenplatte am Fahrzeug oder zur Befestigung des Modulgehäuses an der Zwischenplatte vorgesehen sein. Besonders bevorzugt ist jedoch der erste Fall, die Befestigung des Moduls am Fahrzeug, da die Feder wie gesagt sehr stabil ist und eine hohe Sicherheit für die Rastverbindung bietet. Hierbei kann die Feder natürlich fahrzeugseitig befestigt sein, um mit einem Haken am Modul zu verrasten, oder, bevorzugt, an der Zwischenplatte befestigt sein, um an einem vorzugsweise am Lenkradskelett angeformten Haken anzugreifen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht durch eine linke Hälfte eines erfindungsgemäßen Gassackrückhaltesystems, das lenkradintegriert ist,
- Figur 2 eine perspektivische Ansicht einer der beiden an der Zwischenplatte nach Figur 3 befestigten Federn und
- Figur 3 eine perspektivische Draufsicht auf die unter dem Modulgehäuse sitzende Zwischenplatte.

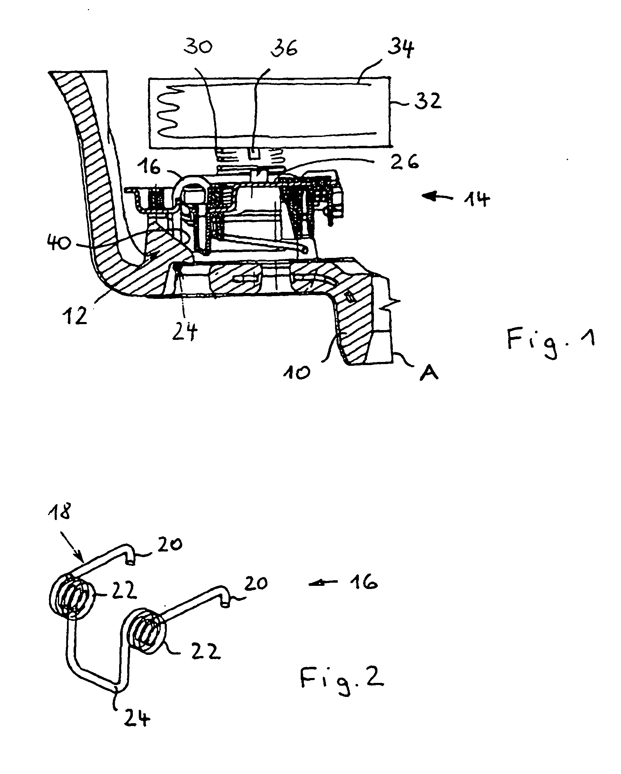

In Figur 1 ist ein lenkradintegriertes Gassackrückhaltesystem dargestellt. Das Lenkrad wird durch ein Lenkradskelett 10 symbolisiert. Das Lenkrad hat eine Lenkradachse A. An das Lenkradskelett sind im Bereich der Lenkradnabe an zwei diametral gegenüberliegenden Stellen nach oben abstehende Haken 12 einstückig angeformt. An diesen beiden Haken 12 ist ein Gassackmodul 14 befestigt, welches als Floating-Horn-Modul ausgebildet ist.

Die Befestigung des Gassackmoduls 14 am Lenkradskelett 10 erfolgt über eine Rastverbindung. Diese Rastverbindung umfaßt die Haken 12 sowie modulseitig vormontierte Federn 16, von denen eine in Figur 2 dargestellt ist. Für jeden Haken 12 ist eine zugeordnete Feder 16 am Modul 14 vorgesehen. Die Feder 16 ist eine Feder, wie sie in ähnlicher Weise in einer Mausefalle verwendet wird. Die Feder 16 umfaßt zwei freie Enden 18, die linear ausgeführt sind und abgewinkelte Endabschnitte 20 besitzen. Die Enden 18 samt ihrer Endabschnitte 20 bilden den Lagerungsabschnitt der Feder 16. Die Enden 18 gehen in jeweils einen separaten zylindrisch gewickelten Abschnitt 22 über. Der Federdraht, aus dem die Feder 16 hergestellt ist, geht schließlich von den gewickelten Abschnitten 22 in einen Bügel 24 über, der den Verriegelungsabschnitt der Feder bildet.

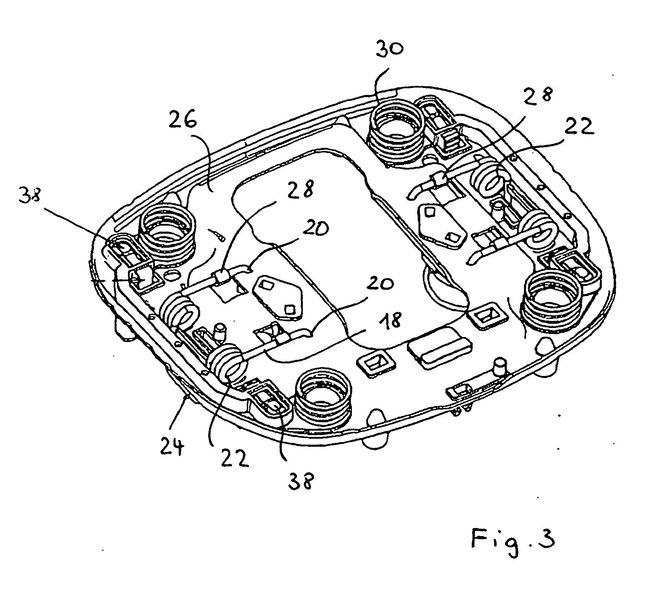

Die beiden Federn 16 sind an einer Zwischenplatte 26 (siehe Figur 3) befestigt. Hierzu durchdringen die Endabschnitte 20 zwei in etwa dem Durchmesser der Feder 16 entsprechend große Öffnungen in der Zwischenplatte 26. Zur zusätzlichen Befestigung werden lappenförmige Blechabschnitte 28 an der Zwischenplatte 26 umgeformt, um die freien Enden 18 zu ergreifen. Die gewikkelten Abschnitte 22 liegen noch oberhalb der Zwischenplatte 26, der Bügel 24 erstreckt sich aber durch eine schlitzförmige Öffnung in der Zwischenplatte 26 nach unten, um gegenüber dieser vorzustehen. Die gewickelten, zylindrischen Abschnitte definieren eine durch sie hindurchgehende gedachte Schwenkachse, um die der Bügel 24 weit verschwenkbar ist.

Auf der Oberseite der Zwischenplatte 26 sind mehrere Rückstellfedern 30 befestigt, die sich bis zu einem Modulgehäuse 32 erstrecken, in dem ein Gassack 34 untergebracht ist. Auf der Unterseite des Modulgehäuses 32 sind vier nahe der Rückstellfedern 30 angeordnete Hupenkontakte 36 angeordnet, die mit Gegenkontakten 38 in Berührung gebracht werden können, wenn das Modulgehäuse 32 vom Fahrer in Richtung der Achse A und entgegen der Kraft der Rückstellfedern 30 nach unten gedrückt wird, um einen Hupenschaltkreis zu schließen. Zur Befestigung des Modulgehäuses 32 an der Zwischenplatte 26 sind ebenfalls Rastverbindungen vorgesehen, die ähnlich ausgeführt sein können wie die zur Befestigung der Zwischenplatte 26 am Lenkradskelett 10.

Das Gassackmodul 14 ist eine vormontierte Einheit, von der nach unten die beiden Bügel 24 abstehen, wenn das Gassackmodul 14 von oben in die topfförmige Aufnahme im Bereich der Lenkradnabe zur Montage eingedrückt wird. Die Bügel 24 wandern bei dieser Montage an einer oberen Rampenfläche 40 jedes Hakens 12 entlang und werden, mit Bezug auf Figur 1, in Richtung zur Achse A verschwenkt, unter elastischer Deformation der Feder 16. Nach Erreichen des radial innersten Punktes des Hakens 12 schnappen die Bügel 24 abrupt nach außen und hintergreifen und umgreifen den zugeordneten Haken 12.

Zur Demontage muß jeder Bügel 24 durch ein Werkzeug wieder nach innen ausgelenkt werden.

Damit die Zwischenplatte 26 in Richtung A lagefixiert ist, wird üblicherweise noch ein elastisches Element zwischen der Zwischenplatte 26 und dem Lenkradskelett 10 vorgesehen.

Die Haken 12 und die Federn 16 bilden eine für das Gassackmodul 14 vorgesehene Befestigungsvorrichtung, die innerhalb des Moduls 14 oder zwischen Modul und einem Fahrzeugteil wie vorliegend dem Lenkradskelett 10 wirken kann.

## Patentansprüche

1. Gassackrückhaltesystem mit
einem Gassackmodul (14) und
einer Befestigungsvorrichtung für das Gassackmodul (14), welche
wenigstens eine mit einem Haken (12) bei der Montage in Rastverbindung Kommende Feder (16) aufweist, wobei
die Feder (16) einen Lagerungsabschnitt und einen hakenseitigen Verriegelungsabschnitt aufweist, **dadurch gekennzeichnet, daß** die Feder (16) zwischen dem hakenseitigen Vorriegelungsabschnitt und dem Lagerungsabschnitt wenigstens einen gewickelten Abschnitt (22) aufweist.

2. Gassackrückhaltesystem nach Anspruch 1, **dadurch gekennzeichnet, daß** der Verriegelungsabschnitt zu einem Bügel (24) geformt ist.

3. Gassackrückhaltesystem nach Anspruch 2, **dadurch gekennzeichnet, daß** der Bügel (24) in montiertem Zustand des Systems den Haken (12) umgreift.

4. Gassackrückhaltesystem nach einem der vorhergehenden Ansprüche, **dadurch gekennzeichnet, daß** der Lagerungsabschnitt zwei freie Enden (18) der Feder (16) aufweist, die jeweils in einen separaten, gewickelten Abschnitt (22) und die gewickelten Abschnitte (22) wiederum in den Verriegelungsabschnitt übergehen.

5. Gassackrückhaltesystem nach einem der vorhergehenden Ansprüche, **dadurch gekennzeichnet, daß** der Lagerungsabschnitt durch umgeformte Blechabschnitte (28) am Modul (14) oder an einem Fahrzeugteil gehalten ist.

6. Gassackrückhaltesystem nach einem der vorhergehenden Ansprüche, **dadurch gekennzeichnet, daß** das Gassackmodul (14) eine Zwischenplatte (26) zwischen dem Fahrzeugteil und einem Modulgehäuse (32) aufweist und auf der Zwischenplatte (26) die Feder (16) vormontiert ist.

7. Gassackrückhaltesystem nach Anspruch 6, **dadurch gekennzeichnet, daß** es in ein Fahrzeuglenkrad integriert ist.

8. Gassackrückhaltesystem nach Anspruch 7, **dadurch gekennzeichnet, daß** der Haken (12) einstückiger Bestandteil eines Lenkradskeletts (10) ist.

9. Gassackrückhaltesystem nach Anspruch 7 oder 8, **dadurch gekennzeichnet, daß** das Modulgehäuse (32) relativ zur Zwischenplatte (26) zum Schließen eines Hupenschaltkreises verschieblich gelagert ist.

10. Gassackrückhaltesystem nach einem der vorhergehenden Ansprüche, **dadurch gekennzeichnet, daß** der Haken (12) Teil der Befestigungsvorrichtung ist.

## Claims

1. A gas bag restraint system comprising
a gas bag module (14) and
a fastening device for the gas bag module (14), the fastening device having at least one spring (16) that during assembly comes into latching engagement with a hook (12),
the spring (16) having a mounting section and a hook-side latching section,
**characterized in that** the spring (16) has at least one wound section (22) between the hook-side latching section and the mounting section.

2. The gas bag restraint system according to claim 1, **characterized in that** the latching section is bent to form a hoop (24).

3. The gas bag restraint system according to claim 2, **characterized in that**, in the assembled state of the system, the hoop (24) encompasses the hook (22).

4. The gas bag restraint system according to any of the preceding claims, **characterized in that** the mounting section has two free ends (18) of the spring (16), each of which continues into a separate, wound section (22), and the wound sections (22) in turn continue into the latching section (24).

5. The gas bag restraint system according to any of the preceding claims, **characterized in that** the mounting section is held on the module (14) or on a vehicle part by reshaped sheet metal sections (28).

6. The gas bag restraint system according to any of the preceding claims, **characterized in that** the gas bag module (14) has an intermediate plate (26) between the vehicle part and a module housing (32), and the spring (16) is preassembled on the intermediate plate (26).

7. The gas bag restraint system according to claim 6, **characterized in that** it is integrated in a vehicle steering wheel.

8. The gas bag restraint system according to claim 7, **characterized in that** the hook (12) is an integral component part of a steering wheel skeleton (10).

9. The gas bag restraint system according to claim 7 or 8, **characterized in that** the module housing (32) is mounted for displacement relative to the intermediate plate (26) for closing a horn circuit.

10. The gas bag restraint system according to any of the preceding claims, **characterized in that** the hook (12) is part of the fastening device.

## Revendications

1. Système de retenue avec coussin à gaz, comportant
un module de coussin à gaz (14) et
un dispositif de fixation pour le module de coussin à gaz (14) qui présente au moins un ressort (16) parvenant en liaison par enclenchement avec un crochet (12) lors du montage,
le ressort (16) présentant un tronçon de logement et un tronçon de verrouillage côté crochet, **caractérisé en ce que** le ressort (16) présente entre le tronçon de verrouillage côté crochet et le tronçon de logement au moins un tronçon (22) enroulé.

2. Système de retenue avec coussin à gaz selon la revendication 1, **caractérisé en ce que** le tronçon de verrouillage est façonné pour former un étrier (24).

3. Système de retenue avec coussin à gaz selon la revendication 2, **caractérisé en ce qu'**à l'état monté du système, l'étrier (24) entoure le crochet (12).

4. Système de retenue avec coussin à gaz selon l'une des revendications précédentes, **caractérisé en ce que** le tronçon de logement présente deux extrémités (18) libres du ressort (16) qui se transforment chacune en un tronçon (22) enroulé séparé, et les tronçons enroulés (22) se transforment à leur tour en le tronçon de verrouillage.

5. Système de retenue avec coussin à gaz selon l'une des revendications précédentes, **caractérisé en ce que** le tronçon de logement est retenu par des tronçons de tôle conformés (28) sur le module (14) ou sur une partie de véhicule.

6. Système de retenue avec coussin à gaz selon l'une des revendications précédentes, **caractérisé en ce que** le module de coussin à gaz (14) présente une plaque intermédiaire (26) entre la partie de véhicule et un boîtier de module (32), et le ressort (16) est préalablement monté sur la plaque intermédiaire (26).

7. Système de retenue avec coussin à gaz selon la revendication 6, **caractérisé en ce qu'**il est intégré dans un volant de direction de véhicule.

8. Système de retenue avec coussin à gaz selon la revendication 7, **caractérisé en ce que** le crochet (12) est un élément d'une seule pièce d'un squelette de volant de direction (10).

9. Système de retenue avec coussin à gaz selon la revendication 7 ou 8, **caractérisé en ce que** le boîtier de module (32) est monté à déplacement par rapport à la plaque intermédiaire (26) pour fermer un circuit de klaxon.

10. Système de retenue avec coussin à gaz selon l'une des revendications précédentes, **caractérisé en ce que** le crochet (12) est une partie du dispositif de fixation.
